# EUROPEAN PATENT APPLICATION

(11) **EP 2 260 999 A1**
(43) Date of publication of application: **15.12.2010**
(21) Application number: 09746514.0
(22) Date of filing: 01.05.2009
(51) Int. Cl.: B29C 45/26, B29C 45/14

(54) **DIE FOR INJECTION MOLDING GLASS WITH FRAME**

(30) Priority: 12.05.2008 JP 2008124467
(71) Applicant: Central Glass Company, Limited, Yamaguchi 755-0001 (JP)
(72) Inventor: NAKATA, Osamu, Matsusaka-shi, Mie 515-0001 (JP); TAKAYAMA, Mitsuhiro, Matsusaka-shi, Mie 515-0001 (JP)
(74) Representative: Manitz, Finsterwald & Partner GbR
(86) International application number: PCT/JP2009/058549
(87) International publication number: WO 2009/139307

(57) **Abstract**

In an injection molding die, there is defined a cavity for a frame or a cavity for the frame and an auxiliary cavity communicating with the cavity for the frame, and into the cavity for the frame or the auxiliary cavity, there is injected a melted resin from a runner through a gate, and a section of the gate has a width of 1 to 5 mm in the direction of a thickness of a plate glass and a width of 10mm or more in the direction parallel with a side of the plate glass but smaller than a side length of the plate glass. When this die is practically used, a load that would be applied to a peripheral portion of the plate glass during injection molding is reduced, so that when the frame is integrally molded to the plate glass by injection molding, undesired breakage of the plate glass is suppressed.

## Description

### Technical Field:

The present invention relates to a method for producing a frame-mounted plate glass that has a frame integrally molded thereto, and a die for injection molding, that is used for integrally molding the frame onto the plate glass by injection molding.

### Background Art:

In windows of motor vehicles, such as electric train, automobile and the like, it is general to mount a plate glass to a metal vehicle body by using a plastic frame.

In recent years, such plastic frame is directly molded on a plate glass by subjecting a fluid resin to an extrusion molding or injection molding, and the frame-mounted plate glass consisting of the plate grass and the frame integrally mounted thereto is used as a part of assembling the vehicle body.

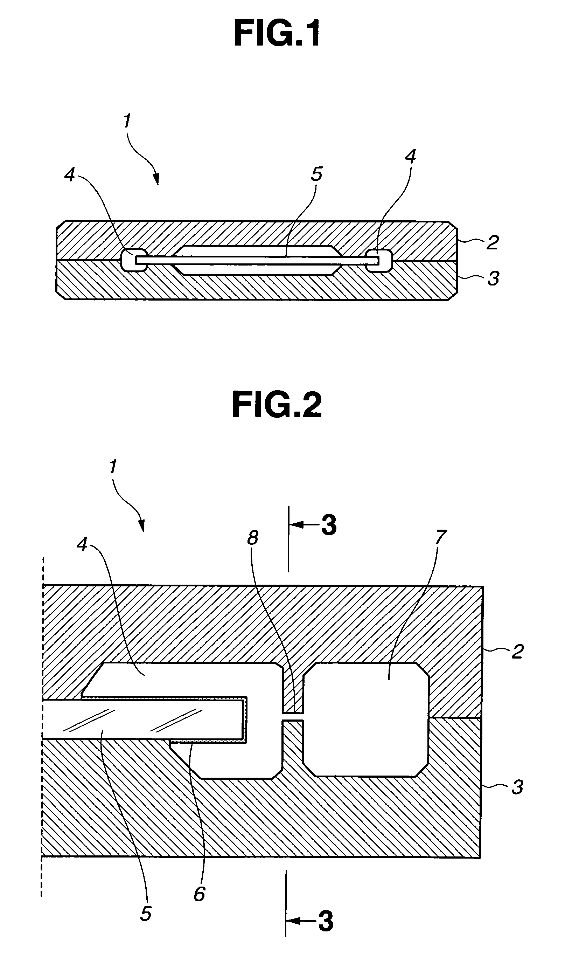

As is seen from Fig. 1, in case of producing a frame-mounted plate glass by injection molding, a plate glass 5 is held between an upper die 2 and a lower die 3 in a manner to form a cavity 4 therearound for the frame. Into the cavity 4, there is injected a fluid resin (or melted resin) for the frame. After the fluid resin in the cavity 4 solidifies, the upper die 2 is removed and a frame-mounted plate glass thus produced is removed from the lower die 3 for the production of the frame-mounted plate glass.

As is seen from Fig. 2, into the cavity 4 for the frame, there is injected the fluid melted resin from a runner 7 through a gate 8.

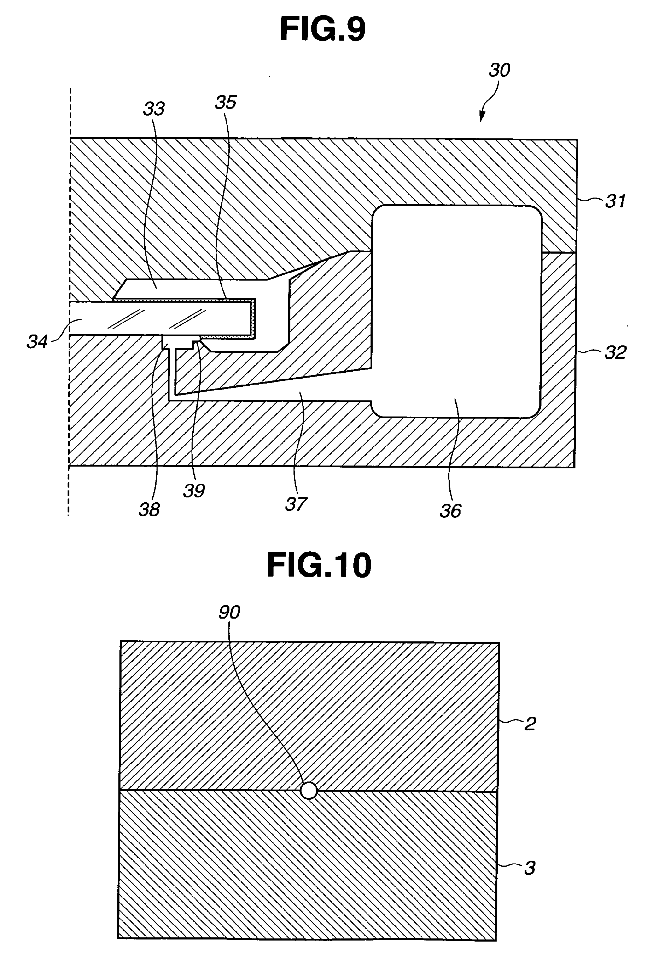

After completion of the injection molding, parts of the resin that have solidified in the gate 8 and the runner 7 are removed from the frame that has formed in cavity 4 for the frame. For facilitating the work for removing the unnecessary parts and minimizing marks formed when the solidified part in the gate is removed, the gate has a diameter of 1 to 2 mm, as is seen from Fig. 10.

During the injection molding, the plate glass 5 is kept pressed by the upper and lower dies 2 and 3 and at the same time the high temperature and high pressure fluid melted resin is led to the peripheral potion of the plate glass 5, and thus complex stresses are produced around the plate glass 5, which tends to break the plate glass 5.

If the plate glass is broken during the injection molding, broken pieces of the plate glass damage an outer surface of the cavity for the frame, and thus, it is necessary to detect breakage of the plate glass 5. One of the methods for detecting such breakage is shown in Patent Document 1.

For avoiding breakage of the plate glass, Patent Document 2 shows an idea of using a dummy plate.

Breakage of the plate glass tends to occur near the gate. In view of this fact, Patent Document 3 proposes provision of a plurality of gates in the injection molding die.

### Prior Art Documents:

### Patent Documents

Patent Document 1: Japanese Laid-open Patent Application (Tokkai) 2003-48233
Patent Document 2: Japanese Laid-open Patent Application (Tokkaihei) 5-57797
Patent Document 3: Japanese Laid-open Patent Application (Tokkai) 2007-313669

### SUMMARY OF THE INVENTION

In methods for avoiding breakage of the plate glass during the injection molding, the method by using the dummy plate shows a very poor productivity and the method by forming plural gates tends to induce a difficulty in practicing the same if the plate glass and/or the frame has a unique shape.

In accordance with the present invention, there is provided an injection molding die which reduces a load applied to a periphery of the plate glass under injection molding thereby to avoid an undesired breakage of the plate glass at the time when a frame is integrally molded to a plate glass by injection molding.

The injection molding die of the present invention is an injection molding die used for molding a plastic frame onto a peripheral portion of a plate glass by injection molding. The molding die is dividable into two or more pieces, and between the divided pieces, there is formed a cavity for the frame or a cavity for the frame and an auxiliary cavity that communicates with the cavity for the frame, and there is arranged a runner from which a fluid melted resin is injected through a gate into the cavity for the frame or the auxiliary cavity. The injection molding die of the present invention has such features that (1) a section of the gate at a boundary part between the gate and the cavity for the frame or the auxiliary cavity has a width of 1 to 5 mm in the direction of a thickness of the plate glass and a width of 10mm or more in the direction parallel with a side of the plate glass but smaller than a side length of the plate glass, and (2) a section of the gate at a boundary part between the runner and the gate has a width of 1 to 20 mm in the direction of the thickness of the plate glass and a width of 2mm or more in the direction parallel with the side of the plate glass but smaller than the side length of the plate glass.

The injection molding die of the present invention has further such features that the section of the gate at the boundary portion between the runner and the gate is circular, oval or generally rectangular in shape.

The injection molding die of the present invention has further such features that the section of the gate at the boundary portion between the gate and the cavity of the frame is oval or generally rectangular in shape.

### BRIEF DESCRIPTION OF THE DRAWINGS

Fig. 1 is a schematically illustrated sectional view showing a method of producing a frame-mounted plate glass by injection molding.
Fig. 2 is a schematically illustrated sectional view showing a portion near a gate formed in an injection molding die.
Fig. 3 is a sectional view taken along the line 3-3 of Fig. 2, that is near a cavity for a frame.
Fig. 4 is a drawing showing various types of section of the gate of the invention.
Fig. 5 is a schematically illustrated plan view of a lower die employed in an embodiment of the present invention.
Fig. 6 is a schematically illustrated plan view of a lower die employed in an embodiment of the present invention.
Fig. 7 is a schematically illustrated sectional view showing another embodiment of the present invention.
Fig. 8 is a schematically illustrated sectional view showing an edge portion of a frame-mounted plate glass produced by the embodiment.
Fig. 9 is a schematically illustrated sectional view of an injection molding die of the embodiment.
Fig. 10 is a drawing showing a sectional view of a gate employed in a conventional technique.

### DETAILED DESCRIPTION OF THE INVENTION

The injection molding die of the present invention used for producing a frame-mounted plate glass is able to reduce the possibility of breakage of the plate glass that would occur during molding of the frame.

The present invention will be described with reference to the drawings, particularly an injection molding die that is dividable into an upper die and a lower die. However, the present invention is not limited to such a dividable die that is dividable into the upper and lower dies. That is, the invention is applicable to an injection molding die that is dividable into left and right dies.

In case of integrally molding a plastic frame onto a peripheral portion of a plate glass by using an injection molding die, such a problem tends to occur that the plate glass is broken during the injection molding.

Fig. 1 is a schematically illustrated sectional view of the die under a condition wherein a frame-mounted plate glass is being produced by injection molding. A plate glass 5 is held between an upper die 2 and a lower die 3 in such a manner that a cavity 4 for the frame is formed around a peripheral edge of the plate glass 5. Into the cavity 4 for the frame, there is injected a fluid melted resin from an inlet opening (not shown), and thus, around the peripheral edge of the plate glass 5, there is integrally molded or formed a frame.

As is seen from Fig. 2 that shows the injection molding die, in case of integrally molding a frame onto the plate glass 5 held by the injection molding die 1, the melted resin is injected into the cavity 4 for the frame from the inlet opening (not shown) through a runner 7. The melted resin flowing in the runner 7 is injected into the cavity 4 for the frame through a gate 8 of a small bore.

In the following, the injection molding die of the invention, particularly, a gate formed in the injection molding die will be described with respect to the function of the gate through which the melted resin from the runner is injected into the cavity for the frame.

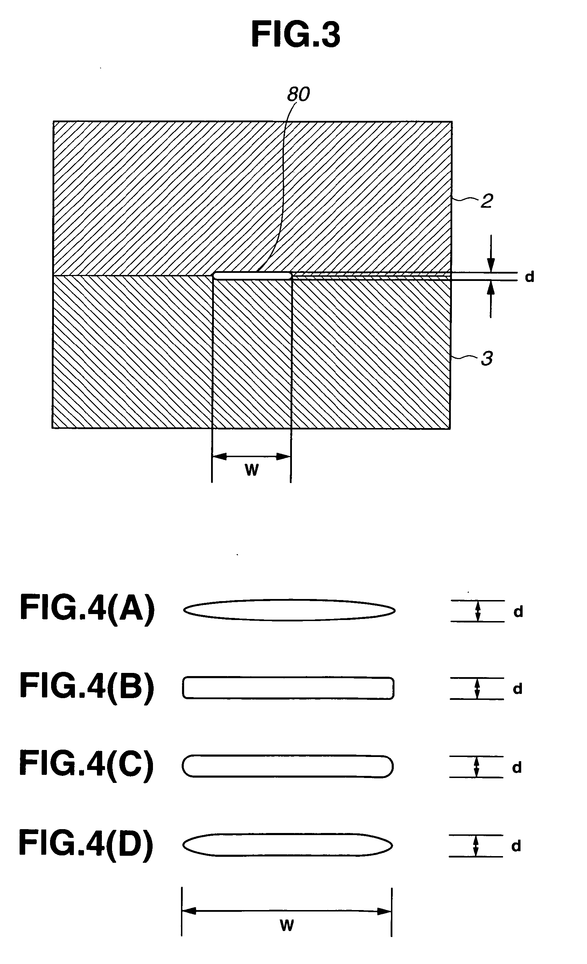

The gate through which the melted resin from the runner is injected into the cavity for the frame is a gate 80 as is seen from Fig. 3 which has a narrow cross-section and functions to inject the melted resin into the cavity for the frame from the runner.

Although in the invention, the cross-section of the gate is not limited to such narrow one, the cross-section of the gate may be, as is shown in Fig. 4, flatten oval (viz., the shape indicated by (A) of Fig. 4) or flatten rectangular (viz., the shapes indicated by (B) to (D) of Fig. 4). More specifically, the cross section may have a flatten rectangular shape with curved corners (viz., the shape indicated by (B)), a flatten rectangular shape with straight longer sides and curved shorter sides (viz., the shape indicated by (C)), and a flatten oval shape (viz., the shape indicated by (D)).

The shape of the gate will be described in detail. That is, the width "d" of the gate in the direction of the thickness of the plate glass may be fixed or varied in a distance from the runner to the cavity for the frame. In the case wherein the width is varied, the width may increase or decrease in accordance with advance from the runner to the cavity for the frame. However, for facilitation of cutting or removing of the resin that has solidified in the gate, it is preferable that the width of gate decreases in accordance with advance from the runner to the cavity for the frame.

Furthermore, it is preferable that the width "d" of the gate in the direction of the thickness of the plate glass is 1 to 5 mm. It is more preferable that the width "d" is 1 to 2 mm. If the width "d" in the direction of the thickness is smaller than 1 mm, it takes a long time to fill the cavity for the frame with the fluid melted resin injected from the gate, and thus, productivity of the frame-mounted plate glass becomes poor.

Furthermore, if the width "d" in the direction of the thickness is larger than 5 mm, it is difficult to cut out the resin portion that has solidified in the gate after completion of the injection molding.

The width "w" of the gate in the direction of the side of the plate glass may be fixed or varied.

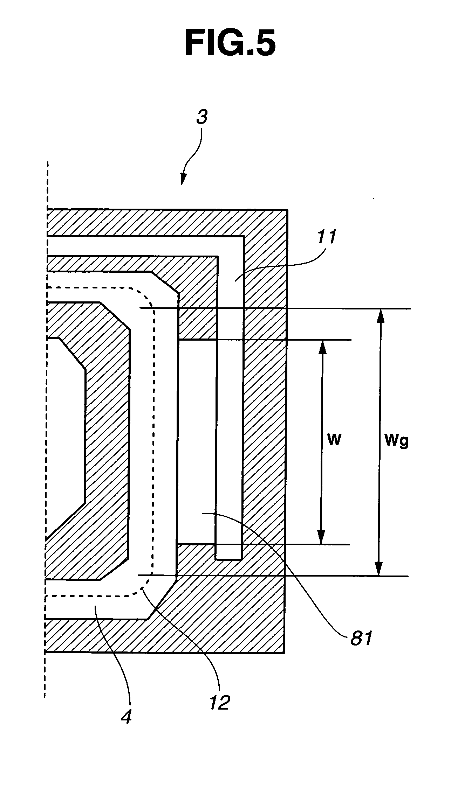

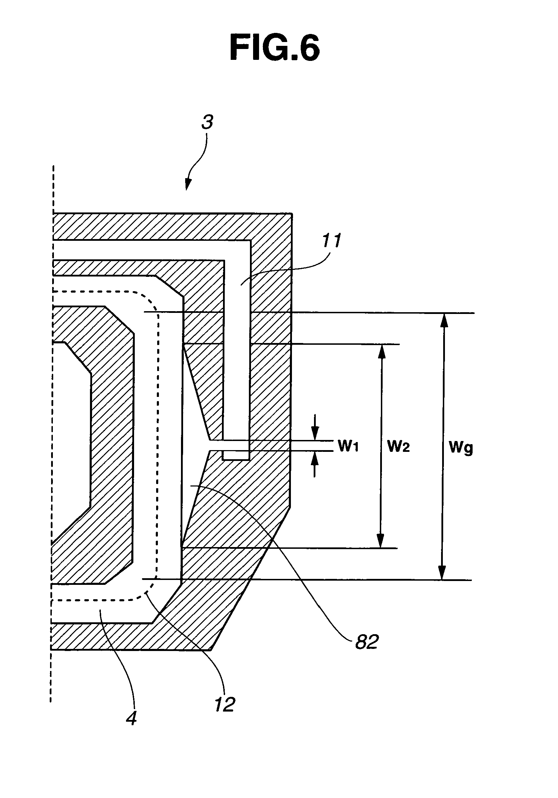

In case wherein the width "w" is fixed, the gate 81 has such a shape as shown in Fig. 5. While, in case wherein the width "w" increases, the gate 82 has such a shape that the width "w1" of the gate 82 in the direction of the side of the same near the runner 11 is larger than the width "w2" of the gate 82 in the direction of the side of the same near the cavity 4 for the frame, as is shown in Fig. 6.

It is preferable that the width "w2" of the gate in the direction of the side thereof at portion near the cavity for the frame is larger than 10 mm. If the width is smaller than 10 mm, a reduction effect against a load produced in the vicinity of the peripheral edge of the plate glass is small, and thus, it becomes difficult to avoid the undesired breakage of the plate glass.

As is seen from Figs. 5 and 6, it is preferable that the width "w2" of the gate 81 or 82 in the direction of the side thereof at a portion near the cavity 4 for the frame is smaller than a side length "wg" of the plate glass 12 to which the frame is mounted.

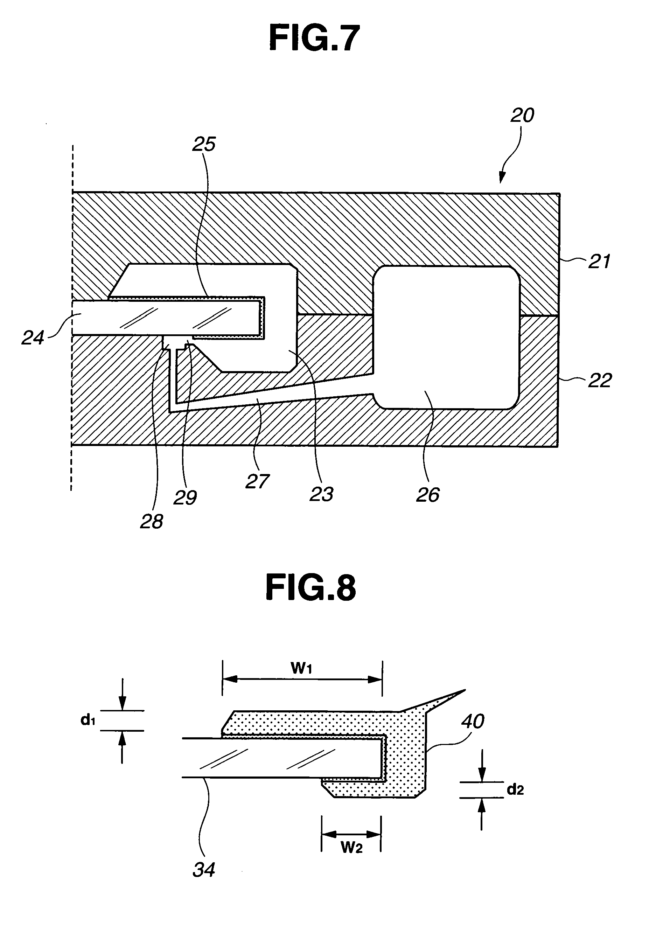

In the present invention, the width of the gate is large. Accordingly, when the melted resin is injected into the cavity for the frame from the gate, undesired phenomenon tends to occur wherein removing the resin solidified in the gate from the frame makes the trace of the removed resin conspicuous. An injection molding die 20 shown in Fig. 7 is another embodiment of the injection molding die of the invention which avoids the above-mentioned drawback.

In the die of Fig. 7, a gate 27 is provided in an auxiliary cavity 28, so that the fluid melted resin is injected into the cavity 23 for the frame from the auxiliary cavity 28 through a communication opening 29 for the frame molding.

After completion of the frame molding, it is preferable that the resin portions that have solidified in the auxiliary cavity 28 and the communication opening 29 are cut out or removed at a boundary part between the resin solidified in the communication bore 29 and the molded frame. The cut out portion is almost concealed and thus no problem occurs. Furthermore, a trace of the gate is not formed on an outer surface of the molded frame, it is possible to obtain a good appearance frame.

The shape of the gate 28 at a boundary part between the gate 27 and the auxiliary cavity 28 is as follows. It is preferable that the width "d" and a size "w" (not shown) that is perpendicular to the width "d" and parallel with the side of the plate glass are the same as those of the section of the gate 80 of Fig. 3.

As a resin for molding the frame integral with the plate glass by using the die of the present invention, thermoplastic elastomer, such as styrene system, olefin system, polyvinyl chloride system, urethane system or the like is usable.

### EMBODIMENT

In the following, an embodiment of the present invention will be described. It is however to be noted that the invention is not limited to the following embodiment.

A rectangular plate glass of a size of 400mm x 600mm with a thickness of 3mm was used, and a frame was integrally molded on a peripheral portion of the plate glass by injection molding.

As is seen from Fig. 8, one side of the molded frame 40 which constitutes a vehicle outside frame portion has a width "w1" of about 30mm and a thickness "d1" of about 3.0mm, and the other side of the molded frame 40 which constitutes a vehicle inside frame portion has a width "w2" of about 8mm and a thickness "d2" of about 2.0mm, so that the width "w1" of the vehicle outside frame portion was about four times as large as the width "w2" of the vehicle inside frame portion resulting in that the width "w1" of the vehicle outside frame portion was greatly larger than the width "w2" of the vehicle inside frame portion.

For producing the above-mentioned frame-mounted plate glass, an injection molding die 30 as shown in Fig. 9 was prepared and injection molding was carried out for molding the frame. In addition to a cavity 33 for the frame, there was further provided an auxiliary cavity 38. The auxiliary cavity 38 and the cavity 33 for the frame are communicated through a communication bore 39.

The thickness of the auxiliary cavity was about 2.0mm and the thickness of the communication bore was about 1.0mm.

Before placing the plate glass 34 onto a lower die 32 after an upper die 31 of the injection molding die 30 was opened, a primer was applied to an outer surface of a peripheral portion of the plate glass 34 on which surface the frame was to be formed.

As the primer, a nylon system adhesive (main ingredient: denatured nylon, solvent: denatured ethanol) was used.

The plate glass 34 was placed between the upper and lower dies 31 and 32 and a melted resin (polyvinyl chloride resin that contains both a plasticizer and a filler mixed thereto, produced by Shin-Etsu Polymer Co., Ltd) was injected into the injection molding die from an injection opening (not shown).

The injection of the resin was carried out under a condition wherein the temperature of the melted resin was 190°C ± 10°C, the temperature of the die was 50°C ± 10°C and the injection pressure was 2 to 6MPa.

After solidification of the injected resin, a unit including the plate glass 34 to which a formed frame 40 with resin portions solidified in the communication bore and the auxiliary cavity are integrally mounted was removed from the injection molding die 30, and the unit was cut at a boundary part between the resin portion solidified in the communication bore and the other resin portion solidified in the cavity for the frame, so that such a frame-mounted plate glass as shown in Fig. 8 was produced which comprises the plate glass 34 to which the frame 40 is integrally molded.

In the embodiment of the present invention, undesired breakage of the plate glass did not occur.

### DESCRIPTION OF REFERENCES

- 1: injection moldong die
- 2: upper die
- 3: lower die
- 4: cavity
- 5: plate glass
- 6: primer
- 7: runner
- 11: runner
- 12: plate glass
- 20: injection molding die
- 21: upper die
- 22: lower die
- 23: cavity for frame
- 24: plate glass
- 25: primer
- 26: runner
- 27: gate
- 28: auxiliary cavity
- 29: communication bore
- 30: injection molding die
- 31: upper die
- 32: lower die
- 33: cavity for frame
- 34: plate glass
- 35: primer
- 36: runner
- 37: gate
- 38: auxiliary cavity
- 39: communication bore
- 40: frame
- 80,81,82: gate
- 90: gate

## Claims

1. An injection molding die used for producing, by injection molding, a frame-mounted plate glass that comprises a plate glass and a plastic frame integrally molded to a peripheral portion of the plate glass, the die being dividable into two or more pieces, the pieces when assembled defining therewithin a cavity for a frame or a cavity for a frame and an auxiliary cavity that communicates with the cavity for the frame, the cavity for the frame or the auxiliary cavity being communicated with a runner that is used for injecting a melted resin into the cavity for the frame or the auxiliary cavity through a gate,
the injection molding die being **characterized in that** (1) a section of the gate at a boundary part between the gate and the cavity for the frame or the auxiliary cavity has a width of 1 to 5 mm in the direction of a thickness of the plate glass and a width of 10mm or more in the direction parallel with a side of the plate glass but smaller than a side length of the plate glass, and (2) a section of the gate at a boundary part between the runner and the gate has a width of 1 to 20mm in the direction of the thickness of the plate glass and a width of 2m or more in the direction parallel with the side of the plate glass but smaller than the side length of the plate glass.

2. An injection molding die as claimed in Claim 1, which is further **characterized in that** a section of the gate at a boundary part between the runner and the gate is circular, oval or generally rectangular in shape.

3. An injection molding die as claimed in Claim 1 or 2, which is further **characterized in that** a section of the gate at a boundary part between the gate and the cavity for the frame is oval or generally rectangular in shape.
